# EUROPEAN PATENT APPLICATION

(11) **EP 4 793 908 A1**
(43) Date of publication of application: **19.08.2026**
(21) Application number: 25158172.4
(22) Date of filing: 17.02.2025
(51) Int. Cl.: G06V 20/69, A01K 61/90, G06N 3/08, G06V 10/778, G06V 10/82, G06N 3/045, G06V 10/25, G06V 10/62

(54) **METHOD AND SYSTEM FOR PROFILING PARTICLES IN TAXAS**

(71) Applicant: Octapod, 112 Reykjavik (IS)
(72) Inventor: Björgvinsdóttir, Ingibjörg, Reykjavik (IS); Þröstur Sigurðarson, Kristinn, Reykjavik (IS)
(74) Representative: KIPA AB

(57) **Abstract**

Disclosed is a computer-implemented method for profiling particles in a taxa using a sequence of input data images. The process involves identifying and categorizing suspended particles in each image to obtain bounding boxes and classification data. These particles are then tracked across subsequent images using the bounding boxes to compile tracking data. The method uses this data to output a profile of the suspended particles, incorporating taxonomic identification and possibly using convolutional operations. It employs two neural networks: one for identifying regions of interest and another for categorizing the particles based on these regions. The profile may include biomass calculations and assessments of ecosystem status, integrating sensor metadata such as depth, chlorophyll-a, salinity, and temperature. Non-particle elements like bubbles and damaged areas are excluded from tracking. The method also encompasses a system setup with a camera and processor, and a computer program that enables the execution of these methods.

## Description

### TECHNICAL FIELD

The present application generally relates to a method and system for profiling particles in taxas, such as gelatinous plankton, zooplankton and marine snow particles and aggregates, and more particularly to techniques for analyzing and characterizing particles based on their physical and chemical properties. Further, the application includes a method for detecting and/or tracking oceanic eddies, having a role in offshore transport and subduction of nutrients supplied by the coastal upwelling and associated organic carbon,

### BACKGROUND

This section is intended to introduce the reader to various aspects of art that may be related to various aspects of the present disclosure, which are described and/or claimed below. Tins discussion is believed to be helpful in providing the reader with background information to facilitate a better understanding of the various aspects of the present disclosure. Accordingly, it should be understood that these statements are to be read in this light, and not as admissions of prior art.

Meso zooplankton represent a highly diverse group of marine organisms which occupy a range of depth levels in the water column and are crucial to the marine ecosystem. They vary in size and the current optical resolution allow to include approximately 200 µm up to larger organisms such as jellyfish. These organisms generally drift through the water column of the pelagic zone of the oceans or fresh bodies of water by means of the water current or through independent movement. MesoZooplankton are the basis of many marine food webs and are an important food source to other marine organisms. Zooplankton are also critical contributors to nutrient cycling in the ocean. Because zooplankton are a crucial food source for many marine organisms, the fishery industry is highly dependent upon zooplankton is a source of fish productivity.

Previous methods of monitoring small marine organisms have generally included large-scale ocean surveys that perform collection via nets and sampling bottles in order to quantify the present states of the ocean such as species, life stages, larvae quantities, among other organic matter. Such methods are most suited for gathering robust marine organisms but typically destroy fragile structures such as gelatinous plankton, zooplankton and marine snow particles and aggregates. Furthermore, abrupt changes to pressure, temperature, and light associated with removal of water from in situ conditions may also have undesirable consequences to the sample. The sampling nets or bottles can not provide adequate depth information with respect to the sample in the water column since the collected suspended particles are mixed within the sample.

In patent application publication WO 2016/048851 A1, a continuous particle imaging device i.e. high-resolution imaging microscope is disclosed for capturing high-resolution images of marine microorganisms in aquatic environment. It has a power source operably connected to an optical system and a light source. The imaging microscope is disclosed for capturing images of marine microorganisms and particles in situ in an aquatic environment. Using darkfield illumination, high-resolution images may be obtained, capturing features of the microorganism or particle. In an open flow-through approach in sample imaging, the structures of the plankton and particles are disclosed as imaged completely intact without damage and in their natural orientation. The images are classified based on physiological and morphological information captured in the image. The disclosed classification method utilizes adaptable training sets of taxonomic categories, providing an identification system.

However, there is a need for an improved and efficient diagnosis of sequences of images, e.g. taken at a fast sinking rate or a high flow rate, which cannot be obtained based on the disclosure of WO 2016/048851 A1 that causes blurred images.

This application addresses the problem of efficiently profiling particles in a taxa using computer vision techniques. The application provides solutions for accurately identifying and categorizing suspended particles in a sequence of input data images, tracking their movement over time, and generating a profile of the suspended particles based on classification and tracking data. The application also addresses the need for taxonomic identification, training neural networks for region of interest identification and particle categorization, extracting biomass calculations and ecosystem status, synchronizing metadata from sensors for environmental characterization, and excluding non-particles from tracking.

### SUMMARY OF THE DISCLOSURE

Embodiments of the invention are associated with various advantages and/or technical effects. Accordingly, embodiments of the present invention preferably seek to mitigate, alleviate or eliminate one or more deficiencies, disadvantages or issues in the art, such as the above-identified, singly or in any combination by providing a computer implemented method and related examples according to the appended patent claims.

A computer implemented method for profiling particles in a taxa is disclosed. It includes inputting a sequence of images, identifying and categorizing suspended particles in each image, tracking these particles, and outputting a profile. Further developments include taxonomic identification, training of neural networks for identifying regions of interest and categorizing particles, biomass calculations, and synchronization of image metadata with the profile for environmental characterization.

In particular, there is disclosed a computer implemented method of profiling of particles in a taxa, comprising:
inputting a sequence of input data images,
identifying and categorizing at least one suspended particle in each image of the sequence of input data images to obtain a bounding box around each particle identified on each image of the sequence of input data images and classification data for each of the at least one suspended particle identified;
tracking the sat least one suspended particle in subsequent images of the sequence of input data images based on the bounding box to obtain tracking data; and
outputting a profile of the suspended particles in the taxa based on the classification data and tracking data.

The method enhances the accuracy of particle profiling by utilizing a sequence of images, which allows for a more comprehensive analysis of particle behavior and characteristics over time.

By providing a bounding box and classification data for each identified particle, the method facilitates detailed tracking and monitoring, enabling precise quantification and assessment of particle dynamics within the taxa.

The output profile generated offers valuable insights into the distribution and interaction of particles, which can be critical for environmental monitoring, quality control in manufacturing processes, or scientific research.

The method allows for efficient profiling of particles in a taxa by inputting a sequence of input data images and identifying and categorizing suspended particles in each image. This enables the generation of a profile of the suspended particles in the taxa.

The method includes taxonomic identification, providing an additional level of categorization and classification for the suspended particles.

The use of neural networks in the method enhances the accuracy and efficiency of identifying regions of interest and categorizing suspended particles in the input data images.

The method allows for the extraction of biomass calculations and the assessment of the ecosystem's status by extracting live organic matter. This provides valuable information for environmental monitoring and analysis.

The inclusion of metadata from sensors in each image of the input data sequence allows for the characterization of environmental conditions, such as depth, chlorophyll-a, salinity, and temperature. This enhances the understanding of the particle profile in relation to the surrounding environment.

The tracking provides for accurate continuous sampling, e.g. in vertical profiling, preventing double counting and giving each tracked suspended particle size measurement, location, and distinction from other suspended particles.

Tracking is uniquely done for videos in a high-flow rate environment. In practice, a high frame rate is preferably used, such as 30 frames per second. This provides in an example for a uniquely advantageous an underwater vertical profiling method. Sensor output is preferably synchronized with each image Furthermore, color images are preferably used for taxonomic identification of particles such as zooplankton and their classification. Each particle is categorized and preferably paired with the environmental features, thus providing an exact sample location of the suspended environment, such as vertical and horizontal.

This method automates huge data extractions, helps to understanding the different qualities of water samples, represented in an underwater video. Data is thus advantageously provided explaining changes in fish stocks, pollution, and climate.

Notably the method can be performed computationally efficient, by creating high-volume, high-resolution data with extremely short processing speed.

Previous methods tend to be magnitudes more labor-intensive and provide only a highly limited view and scope of the sampled marine environment.

In a development, the method further comprises identifying and categorization including taxonomic identification. Incorporating taxonomic identification into the categorization process allows for a more refined analysis of the biological composition within the taxa, which is essential for ecological studies and biodiversity assessments. The method can contribute to the advancement of taxonomy by automating the identification process, potentially discovering new species or variations within a taxa through detailed image analysis. Enhanced taxonomic resolution in particle profiling can improve the accuracy of ecological models and predictions, leading to better environmental management and conservation strategies.

In a development, the method further comprises a first neural network being trained for identifying at least one regions of interest in each image of the sequence of input data image.

Utilizing a first neural network trained to identify regions of interest ensures that the system focuses computational resources on relevant areas within the images, improving processing efficiency and reducing analysis time. The neural network's ability to learn from data enables the method to adapt to various types of particles and conditions, enhancing its applicability across different taxa and environments. The automated identification of regions of interest by the neural network minimizes human error and subjectivity, leading to more consistent and reliable particle profiling results.

In a development, the method further comprises a second neural network being trained for identifying and categorizing the at least one suspended particle in each image of the subsequent images of the sequence of input data images based on the at least one regions.

A second neural network dedicated to identifying and categorizing particles allows for a specialized approach that can be optimized for higher accuracy in classification tasks, resulting in more precise particle analysis. The division of tasks between two neural networks enables parallel processing, which can significantly speed up the analysis of large datasets, making the method suitable for real-time applications. By training the second neural network on subsequent images, the system can improve its categorization performance over time, adapting to changes in particle appearance and behavior, which is particularly beneficial for long-term monitoring studies.

In a development, the method further comprises a profile including biomass calculations and/or status of the ecosystem by extracting live organic matter.

The inclusion of biomass calculations and the status of the ecosystem in the profile enhances the method's utility for environmental monitoring and management, allowing for more informed decision-making regarding conservation efforts and resource allocation. By extracting live organic matter, the method provides a direct measure of the biological productivity and health of the ecosystem, which is crucial for assessing the impact of environmental changes and human activities on biodiversity.

In a development, the method further comprises each image of the sequence of input data images including metadata from sensors, which is synchronized with the profile to obtain characterization of environmental conditions.

The synchronization of sensor metadata with the profile ensures that each image is contextualized with relevant environmental conditions, leading to more accurate and reliable data analysis for ecological assessments. This comprehensive approach to data integration allows for the correlation of visual observations with environmental parameters, facilitating a deeper understanding of the interactions between different ecosystem components.

In a development, the method further comprises metadata including at least one of depth, chlorophyll-a, salinity and temperature.

Including metadata such as depth, chlorophyll-a, salinity, and temperature provides a multi-dimensional view of the aquatic environment, enabling the detection of patterns and trends that may not be apparent from visual data alone. The method's ability to capture a range of environmental variables enriches the dataset, making it possible to perform more sophisticated ecological modeling and prediction of ecosystem responses to various stressors.

In a development, the method further comprises identifying and categorizing including convolutional operations once on a whole of each image of the sequence of input data images.

Performing convolutional operations on the entirety of each image ensures comprehensive analysis, reducing the likelihood of missing important features that could be critical for accurate identification and categorization of ecological elements. This approach maximizes the use of available data by processing entire images, which can lead to the discovery of new patterns and relationships within the ecosystem that localized or segmented analysis might overlook.

In a development, the method further comprises bounding box related non-particles, such as bubbles and damaged regions, being excluded from tracking.

Enhances the accuracy of particle tracking by ensuring that only relevant particles are monitored, thereby improving the reliability of the data collected. Reduces computational load and processing time by excluding non-particle elements such as bubbles and damaged regions from the analysis, leading to more efficient data processing.

There is disclosed a system for profiling of particles in a taxa, comprising:
a camera to provide a sequence of input data images; and processor unit configured to execute the computer implemented method.

This provides a comprehensive profiling system for particles within a taxa by utilizing a sequence of input data images, which allows for detailed analysis and classification of particles. The integration of a camera with a processor unit streamlines the data acquisition and processing workflow, resulting in a seamless operation from image capture to particle profiling.

There is disclosed a computer program comprising instructions which, when the program is executed by a computer, cause the computer to carry out the method of any to This offers flexibility and ease of deployment as the computer program can be installed on various computer systems, enabling the method to be executed in different operational environments. This facilitates consistent and standardized execution of the particle tracking method, ensuring that the process is repeatable and can be validated across different datasets and applications.

A further aspect of the discloser relates to a computer-implemented method for detecting and/or tracking oceanic eddies. The method includes:
receiving input data comprising oceanic velocity and position measurements, such as at multiple time steps;
initializing a state vector representing an eddy's position and velocity, wherein the initial velocity is set to zero;
updating the state vector;
associating detected eddies with existing tracks based on cost matrices evaluating intersection-over-union, vorticity consistency, and radius similarity;
outputting detected and tracked eddies, including their positions, velocities, and vorticities.

Some examples include the association of detected eddies with existing tracks is performed using three cost matrices, the first representing the intersection-over-union (loU) between tracked and detected eddies, the second representing vorticity similarity, and the third representing radius similarity, wherein detections with costs exceeding a predefined threshold are excluded from tracking.

Some examples includes that an eddy is classified as cyclonic or anticyclonic based on the sign of its relative vorticity, computed as the difference between the meridional velocity gradient in the zonal direction and the zonal velocity gradient in the meridional direction.

Some examples include filtering detected eddies based on a minimum lifetime threshold, such that only eddies persisting for more than a predefined duration are retained in the tracking output.

Some examples include filtering out unassigned tracks and initializing new tracks for unmatched detections; and/or
Some examples include applying the Hungarian algorithm to optimize the assignment of eddy detections to tracked eddies; and
In some examples, the state-vector is updated applying a Kalman filter to iteratively update the state-vector. In some examples, the Kalman filter iteratively updates the state vector by:
   predicting the eddy's next position using a state transition matrix,
   updating the prediction with newly received position measurements,
   computing a covariance matrix to quantify uncertainty in the estimation, and
   refining the prediction using a measurement noise matrix and a process noise matrix.

### BRIEF DESCRIPTION OF DRAWINGS

The present disclosure is illustrated by way of example and not limited in the accompanying figures in which like reference numerals indicate similar elements. Embodiments of the application will now be described with reference to the attached drawings:
Figure 1 shows a flowchart diagram for the software of the application,;
Figures 2A and 2B show various stages of detecting microorganisms with the application,;
Figure 3 shows a schematic overview of the model for detecting particles;
Figure 4 shows a schematic view of the model for detecting particles;
Figure 5 shows a schematic view of the model for detecting particles;
Figure 6 shows a schematic diagram over a precision-Recall Curve related to the model
Figures 7A and 7B show schematic Loss and Accuracy diagrams related to the model;
Figure 8 shows a schematic confusion matrix;
Figure 9A and 9B show diagrams related to tracking accuracy of the model;
Figure 10 shows an image with multiple classified bounding boxes;
Figure 11 shows an enlarged view of a section of Fig. 10;
Figure 12 shows an overview of a device for carrying out the method of the application; and
Figure 13 shows a flow-chart diagram over a method for detecting and/or tracking oceanic eddies.

In the figures, the same or similar features are referenced by the same reference numerals.

### DEFINITIONS

A "first particle" designates a particle that is identified and categorized in a second image of said sequence of input data images.

A "second particle" designates a particle that is not a first particle.

A "third particle" designates a particle that is not a suspended particle.

A "fourth particle" designates a particle that is not a suspended particle.

A "fifth particle" designates a particle that is not a suspended particle.

A "sixth particle" designates a particle that is not a particle of interest.

A "seventh particle" designates a particle that is not a suspended particle.

As used herein, the term "particles" refers to a non-volatile or semi-volatile species.

An "original image a" designates the tracking.

A "gray scale image b" designates a digital image that is a two-dimensional array of pixels, each pixel having a gray scale value.

A "bounding boxes c" designates the bounding boxes of the particles identified in the images of the sequence of input data images.

An "array" designates a two-dimensional array of pixels.

A "Sensor optical system" designates the optical system of the sensor, which is used to capture images of the water column.

As used herein, the term "computer implemented method" refers to a method that is computer-implemented by a neural network.

A "particle tracking step" designates the tracking of a particle in subsequent images of said sequence of input data images based on said bounding box.

A "profile outputting step" designates the step of outputting a profile of said suspended particles in said taxa based on said classification data and tracking data.

As used herein, the term "camera" may refer to any device that can provide a sequence of input data images.

A "flashlight" designates a light source that is used to illuminate the water column.

A "battery" designates a device that can be used to power a computer.

An "electronic" designates any device that can be used to store, process, and/or communicate information, including but not limited to computers, personal digital assistants, cell phones, smart phones, tablets, and other electronic devices.

A "temperature-depth system" designates a system that includes a temperature sensor and a depth sensor.

A "Nitrite sensor" designates a sensor that measures the concentration of nitrite in the water.

As used herein, the term "sequence of input data images" refers to a sequence of at least one image (i.e. sequence of input data images) that is displayed on an image of a taxa. The term "input data images" is used herein to refer to sequences of input data images. As used herein, the term "suspended particle" refers to a particle that has been suspended in space for at least some time.

A "profile of particles" designates a profile of the particles in a taxa, which includes biomass calculations and/or status of the ecosystem.

The term "neural network" as used herein refers to a neural network that is trained for identifying and categorizing at least one region of interest in each image of the sequence of input data images.

As used herein, the term "bounding box" refers to a boundary around which each suspended particle is placed.

As used herein, the term "classification data" refers to a set of information that can be used for identifying and categorizing suspended particles in a taxa.

As used herein, the term "subsequent images" refers to subsequent sequences of input data images.

A "tracking datum" designates a data point that is used to track a particle in subsequent images of said sequence of input data images.

As used herein, the term "regions of interest" refers to regions in a taxa that are not necessarily identified on each image of the sequence of input data.

A "metadata from sensors" designates metadata from sensors that are synchronized with the profile.

An "environmental condition" designates a physical condition of the environment, such as temperature, salinity, and depth.

The term "computer program" as used herein refers to a set of instructions which are executed by a computer.

A "sit least one suspended particle" designates a particle that is identified and categorized in at least one image of said sequence of input data images.

A "sit least one suspended particle in subsequent images" designates the fact that the particle is tracked in subsequent images of the sequence of input data images.

A "taxonomic identification" designates the identification of the taxa of the particle.

As used herein, the term "neural network" refers to a neural network that is trained for identifying and categorizing at least one region of interest in each image of each image of the sequence of input data images.

As used herein, the term "neural network" refers to a neural network that is trained for identifying and categorizing at least one suspended particle in subsequent images of the sequence of input data images.

As used herein, the term "biomass calculation" refers to a series of calculations that include biomass measurements and/or status data.

A "live organic matter" designates the organic matter that is alive and not dead organic matter.

As used herein, the term "convolutional operations" refers to a series of algorithms that perform convolutional operations on a whole of an image of each sequence of input data images.

As used herein, the term "bounding box related non-particles" refers to suspended particles that have a bounding box around them.

A "damaged region" designates a region of a particle that is damaged by a physical or chemical process.

The term "processor unit" as used herein refers to any computing device comprising one or more processor cores and memory.

### DETAILED DESCRIPTION

Disclosed is a computer method for profiling particles in a taxa. The particles could be any of gelatinous plankton, zooplankton marine snow particles and aggregates. It involves inputting a sequence of images, identifying and categorizing suspended particles in each image to obtain a bounding box and classification data, tracking these particles in subsequent images based on the bounding box to obtain tracking data, and outputting a profile based on the classification and tracking data. Developments include taxonomic identification, training of neural networks for identifying regions of interest and categorizing particles, biomass calculations, and synchronization of image metadata with the profile for environmental characterization. Non-particle bounding boxes are excluded from tracking. In more detail, in examples, the disclosure includes a computer-implemented method for profiling particles in a taxa using a sequence of input data images. The process involves identifying and categorizing suspended particles in each image to obtain bounding boxes and classification data. These particles are then tracked across subsequent images using the bounding boxes to compile tracking data. The method uses this data to output a profile of the suspended particles, incorporating taxonomic identification and possibly using convolutional operations. It employs two neural networks: one for identifying regions of interest and another for categorizing the particles based on these regions. The profile may include biomass calculations and assessments of ecosystem status, integrating sensor metadata such as depth, chlorophyll-a, salinity, and temperature. Non-particle elements like bubbles and damaged areas are excluded from tracking. The method also encompasses a system setup with a camera and processor, and a computer program that enables the execution of these methods.

Not only may the method described be used to profiling taxa in sea and lake, it may also be used land based fish farming, such as in a fast-flow system like an exhaust pipe to determine the amount of particles in the system, such as for feeding the farmed fish.

There is also disclosed a computer-readable medium comprising instructions which when executed by a computer to perform the computer-implemented method a method, or a process, or a use, all for profiling of particles in a taxa.

In particular, there is disclosed a computer implemented method of profiling particles in a taxa. The term computer implemented method of profiling is used herein to in particular refer to a technique for generating a profile of suspended particles in a taxa of particles.

The term profiling of particles is used herein to refer to a method for obtaining a profile of suspended particles in a taxa. The term taxa is used herein to refer to a group of particles in a taxa.

The computer implemented method comprises inputting a sequence of input data images. The term sequence of input data images is used herein to refer to the sequence of input data images. The computer implemented method further comprises identifying and categorizing at least one suspended particle in each image of the sequence of input data images to obtain a bounding box around each particle.

The term suspended particle is used herein to refer to a particle that has been suspended in a medium for a certain amount of time, and is identified on each image of the sequence of input data images and classification data for each of the at least one suspended particle identified.

The term image is used herein to refer to the sequence of input data images.

The term bounding box is used herein to refer to a boundary around which each suspended particle can be identified.

The term particles is used herein to refer to a variety of non-volatile species, including but not limited to: plants, animals, fish, insects, birds, mammals, and the like.

The term classification data is used herein to refer to any information that can be used for identifying and categorizing suspended particles in a taxa.

The computer implemented method moreover comprises tracking the at least one suspended particle in subsequent images of the sequence of input data images based on the bounding box to obtain tracking data.

The term suspended particle in subsequent images refers to a suspended particle that has been identified on each image of the sequence of input data images.

The data that is used to track the particles in subsequent images of the sequence of input data images.

The computer implemented method further comprises outputting a profile of the suspended particles in the taxa based on the classification data and tracking data.

The term profile is used herein to refer to a profile of the suspended particles in a taxa.

In a development, the method further comprises identifying and categorization including taxonomic identification.

The term categorization is used herein to refer to the classification of particles in a taxa.

In a development, the method further comprises a first neural network being trained for identifying and categorizing at least one regions of interest in each image of the sequence of input data image being trained for identifying at least one regions of interest ) in each image of the sequence of input data image
The term first neural network is used herein to refer to a neural network.

The term regions of interest is used herein to refer to regions in a taxa.

The term sequence is used herein for a sequence of images of the same scene, which are taken consecutively in time.

In a development, the method further comprises a second neural network being trained for identifying and categorizing the at least one suspended particle in each image of the subsequent images of the sequence of input data images based on the at least one regions.

Tthe term second neural network is used herein to refer to a neural network being trained for identifying and categorizing at least one region of interest in each image of the sequence of input data images.

Tthe term subsequent images is used herein to refer to the subsequent sequence of input data images.

The term regions is used herein to refer to regions of interest in a taxa.

In a development, the method further comprises a profile including biomass calculations and/or status of the ecosystem by extracting live organic matter.

The term biomass calculations is used herein to refer to a variety of methods for calculating the biomass of an ecosystem.

The term status is used herein to refer to the status of an ecosystem.

The term ecosystem is used to refer to a collection of living organic matter in an ecosystem, the amount of organic matter that is alive and growing.

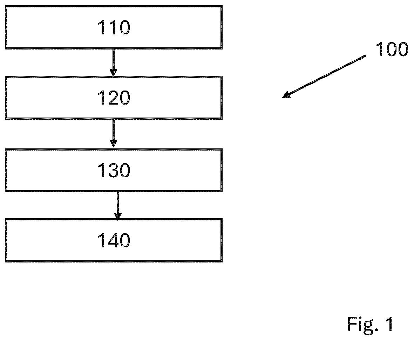

Fig. 1: shows a flowchart diagram for the software of the application, in particular Fig. 1 illustrates a computer-implemented method (software) 100, specifically designed for the profiling of suspended particles in an aquatic environment. This method is part of the operational process of a software denoted as an example of a computer-implemented method, denoted with "MarPar" herein, and includes, as for example shown in Fig. 1, the following steps:
- Inputting image data step 110: This initial step involves receiving a continuous stream of high-definition video frames, capturing a detailed view of the aquatic environment. It is the foundational stage where raw video data is collected for further analysis.
- Identifying and categorizing step 120: During this stage, each frame from the input data is analyzed to detect and identify suspended particles. These particles are then categorized, potentially using taxonomic identification, which is facilitated by a neural network trained for recognizing various marine life forms.
- Particle tracking step 130: After identification, the particles are tracked across subsequent video frames. This tracking involves the use of bounding boxes to follow each identified particle, thereby generating tracking data. It ensures that entities are consistently observed over time, enabling continuous monitoring and the prevention of double counting.
- Profile outputting step 140: The final step of the method compiles the tracking and classification data to create a comprehensive profile of the suspended particles. This profile may include biomass calculations and the status of the ecosystem, facilitated by metadata from environmental sensors synchronized with the video data, providing a full characterization of the conditions under which the observations were made.

The depiction of Fig. 1 outlines the MarPar software's approach to processing and analyzing underwater video data to generate meaningful information regarding marine ecosystems, with the potential to significantly advance the field of aquatic research.

Figure 1 shows a computer implemented method and system for profiling particles in a taxa. The method involves inputting a sequence of input data images and identifying and categorizing at least one suspended particle in each image. This is done by obtaining a bounding box around each particle and classification data for each identified particle. The method further includes tracking the suspended particles in subsequent images based on the bounding box, resulting in tracking data. The profile of the suspended particles in the taxa is then generated based on the classification data and tracking data.

In one embodiment, the identification and categorization step includes taxonomic identification of the particles. This allows for a more detailed analysis of the particles present in the taxa.

To aid in the identification and categorization process, the method utilizes neural networks. A first neural network is trained to identify regions of interest in each image, while a second neural network is trained to identify and categorize the suspended particles based on these regions.

The generated profile includes various parameters such as biomass calculations and the status of the ecosystem by extracting live organic matter. This provides valuable information about the composition and health of the taxa.

Additionally, each image in the sequence of input data images includes metadata from sensors. This metadata, which can include information such as depth, chlorophyll-a, salinity, and temperature, is synchronized with the profile to obtain a characterization of the environmental conditions during the particle profiling process.

Thus, in a development, the method further comprises each image of the sequence of input data images including metadata from sensors, i.e. metadata from sensors that is synchronized with the profile, to obtain characterization of environmental conditions, such as the characterization of environmental conditions of the water column, the characterization of environmental conditions of the water.

In a development, the method further comprises metadata, i.e. the term metadata is used in this context to refer to any information relating to environmental conditions, including at least one of depth, i.e. the distance from a certain point under the surface of a water column to the surface of the water column, such as chlorophyll-a, chlorophyll-b, and chlorophyll-c, salinity (the term salinity is used herein to refer to the relative salinity of water) and temperature (of the water at a certain point below the water surface).

The identification and categorization step is performed using convolutional operations on the entire image, ensuring a comprehensive analysis of the particles.

To ensure accurate tracking, the method excludes bounding box-related non-particles, such as bubbles and damaged regions, from the tracking process.

Thus, in a development, the method further comprises bounding box related to non-particles (particles that are not suspended particles, but are bounding boxes that are related to not suspended particles), such as bubbles and damaged regions, being excluded from tracking

In a development, the method further comprises identifying and categorizing including convolutional operations (the term convolutional operations is used herein to refer to the operation of convolution in a neural network) once on a whole of each image of the sequence of input data images.

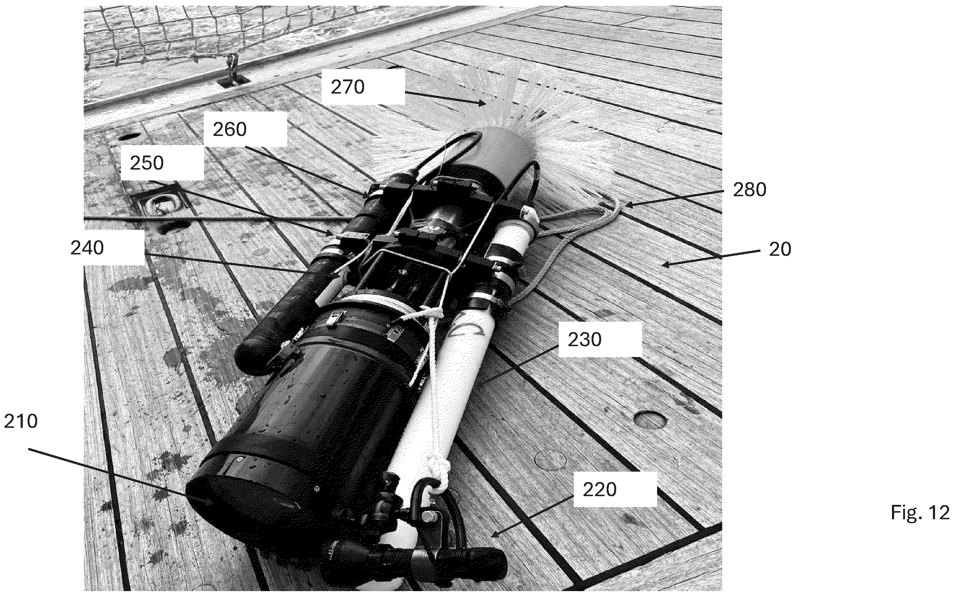

The system for profiling particles in a taxa includes a camera to provide the sequence of input data images and a processor unit configured to execute the computer implemented method. An example of a system is described below with reference to Fig. 12.

There is disclosed a system for profiling of particles in a taxa, comprising in an example a camera to provide a sequence of input data images; and processor unit configured to execute the computer implemented method(s) described herein.

The term camera is used herein to refer to any apparatus which may be used to provide a sequence of input data images.

The term processor unit is used herein to refer to a single processor or a plurality of the same.

Furthermore, a computer program is provided that includes instructions to carry out the method when executed by a computer. This allows for easy implementation and execution of the profiling method.

There is disclosed a computer program comprising instructions which, when executed by a computer, cause the computer to carry out the method(s) described herein, which, when the program is executed by a computer causes the computer to carry out the method(s) described herein.

The term computer program comprising instructions is intended to refer to a set of instructions for a computer to carry out the instructions. The term computer as used herein refers to a data processing entity including a neural network which may be implemented in hardware, software or some combination of hardware and software. The term computer may include the use of a single or multiple processors carrying out various tasks of the computer program.

In summary, Figure 1 illustrates an example of a method and system for profiling particles in a taxa, which involves inputting a sequence of images, identifying and categorizing suspended particles, tracking the particles, and generating a profile based on the classification and tracking data. The method utilizes neural networks, incorporates metadata from sensors, and excludes non-particles from tracking to ensure accurate and comprehensive particle profiling.

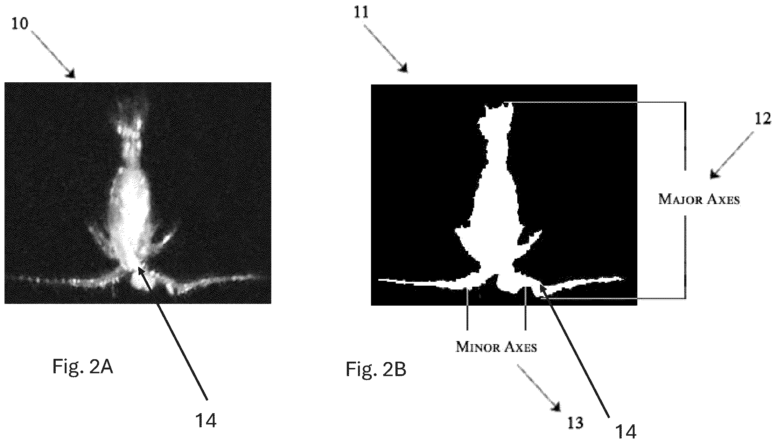

Figs. 2A and 2B: shows detecting microorganisms with the application. Fig. 2A shows a a cropped out image 10 with a particle 14. Fig. 2B shows a black and white representation 11 of the image 10 where the content of the image, i.e. the particle 14, is white and the background is black. In the black and white representation 11, a major axis 12 is found by fitting rotated bounding box around the object, and taking the longer side.

Further, a minor axes 13 is found by dividing the area or number of white pixels by semi major axis witch is the major axes divided by two, multiplied by Pi to get semi minor axes witch is minor axes divided by two. The volume may then be found with the formula V = 4/3 * pi * semi major axes * semi minor axes * semi minor axes.

The way of detecting a microorganism may be used in the computer implemented method and system for profiling particles in a taxa. The method may involve inputting a sequence of input data images, which are obtained from a camera. Each image in the sequence is then processed to identify and categorize at least one suspended particle. This identification and categorization may include taxonomic identification, where the particles are classified based on their taxonomic characteristics, such as volume.

To facilitate the identification process, a first neural network may be trained to identify regions of interest in each image. These regions of interest may then used by a second neural network to identify and categorize the suspended particles in subsequent images of the sequence. The identified particles may be tracked across the sequence of images based on their bounding boxes, resulting in tracking data. The output of the method is a profile of the suspended particles in the taxa. This profile is generated based on the classification data and tracking data obtained during the process. The profile may include biomass calculations and provide information about the status of the ecosystem by extracting live organic matter.

In addition to the image data, each image in the sequence may also include metadata from sensors. This metadata, which may include information such as depth, chlorophyll-a, salinity, and temperature, is synchronized with the profile to obtain a characterization of the environmental conditions during the particle profiling process.

The system for profiling particles in a taxa may include a camera to capture the sequence of input data images. These images may then processed by a processor unit, which executes the computer implemented method described above. The system may also include a computer program comprising instructions that, when executed by a computer, cause the computer to carry out the method.

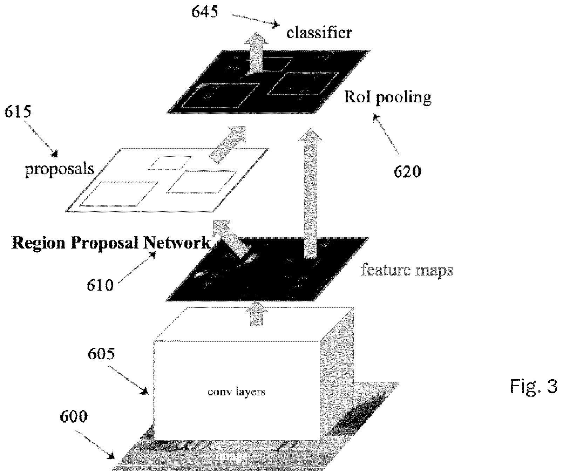

Fig. 3: shows a schematic overview of the software of the application, in particular Fig. 3 portrays the architecture of a Region Proposal Network (RPN) integrated within a convolutional neural network (CNN), used for the detection and classification of objects within an image, as applied in the MarPar software system.

Fig. 3 includes the features, input image 600; conv Layers 605, the convolutional layers are responsible for processing the raw input image. These layers progressively extract features from the image, starting from basic features like edges and textures at lower layers to more complex features like parts of objects at higher layers. As the image passes through multiple convolutional layers, the network builds a hierarchical representation of features. This hierarchy moves from simple to complex, enabling the network to understand the image at different levels of abstraction. The deeper the layer, the more abstract the features it captures.

Region Proposal Network (RPN):610. This network is responsible for generating possible regions of interest in images that may contain objects. The key components of the Region Proposal Network are. Anchor boxes anchors are used to generate region proposals, it uses a set of predefined anchor boxes with various scales and aspect ratios. These anchor boxes are placed at different positions on the feature maps.

Sliding Window approach: The RPN operates as a sliding window mechanism over the feature map obtained from the CNN backbone. It uses a small convolutional network to process the features within the receptive field of the sliding window. This convolutional operation produces scores indicating the likelihood of an object's presence and regression values for adjusting the anchor boxes.

Objectness Score: The objectness score represents the probability that a given anchor box contains an object of interest rather than being just background, the RPN predicts this score for each anchor. The objectness score reflects the confidence that the anchor corresponds to a meaningful object region. This score is used to classify anchors as either positive (object) or negative (background) during training.

IoU (Intersection over union): Intersection over Union (IoU) is a metric used to measure the degree of overlap between two bounding boxes. It calculates the ratio of the area of overlap between the two boxes to the area of their union.

Non-Maximum Suppression (NMS): NMS is used to remove redundancy and select the most accurate proposals, based on the objectness scores of overlapping proposals and keeps only the proposal with the highest score while suppressing the others.

Proposals 615: After computing scores and refinements for all anchors, a set number of top-scoring proposals are selected based on their objectness scores.

Rol pooling 620: The proposals generated by the RPN are processed using Rol (Region of Interest) Pooling. Rol Pooling takes these proposals and extracts fixed-size feature vectors from the feature maps (created by the conv layers) corresponding to each proposed region. This is crucial because it allows the network to handle inputs of varying sizes and shapes by normalizing them into a consistent format; and
classifier 615: These fixed-size feature vectors are then fed into fully connected layer which classifies the content of the proposed regions into different object categories and refine the bounding box coordinates for each detected object.

The generic name for RCNN (Region-based Convolutional Neural Network) neural networks is often referred to as "Region-based CNN" or "Region-based Convolutional Neural Network." These types of neural networks are designed for object detection tasks and are part of a family of models used to locate and classify objects within an image. The term "CNN" stands for Convolutional Neural Network, which is a type of deep learning model specifically designed for processing structured grid data, such as images. In a more general or "genetic" sense, CNNs belong to a broader category of neural networks known as "feedforward neural networks." However, what distinguishes CNNs are their specialized layers and operations tailored for spatial hierarchies in data.

RCNNs have evolved into several well-known variants, each improving upon the original design:
R-CNN (Region-based Convolutional Neural Networks): The original model that uses selective search to generate region proposals and then applies a CNN to each proposal.

### Overview:

Input Image: Start with an input image from which we want to detect objects.

Region Proposals: Use a technique called selective search to generate around 2000 region proposals. These are potential bounding boxes where objects might be located. Selective search combines the benefits of both exhaustive search (covering all possible regions) and segmentation (merging similar regions). Exhaustive search, also known as brute-force search, is a method where every possible option or combination is tried in order to find a solution to a problem. In object detection, this means evaluating every possible sub-region of an image to see if it contains an object. Segmentation is the process of dividing an image into segments, which are sets of pixels that are similar in some way. These segments can correspond to parts of objects, entire objects, or background areas.

Warping and Resizing: Each of the proposed regions is then warped (or reshaped) to a fixed size. This is necessary because the CNN requires a fixed-size input.

Feature Extraction: Each resized region proposal is passed through a Convolutional Neural Network (CNN), such as AlexNet, to extract features. The CNN acts as a feature extractor, transforming the image data into a high-dimensional feature vector that captures the essential information about the region.

Fast R-CNN: An improvement over R-CNN that integrates the region proposal generation and classification into a single network, making the process faster and more efficient.

### Overview:

### Single Network Processing:

Single Forward Pass: Instead of processing each region proposal independently, Fast R-CNN processes the entire image in a single forward pass through the CNN. This generates a feature map for the entire image.

### Region of Interest (Rol) Pooling:

Rol Pooling Layer: Fast R-CNN introduces the Rol pooling layer, which extracts fixed-size feature vectors for each region proposal directly from the shared feature map. This allows all region proposals to share the computation of the CNN's convolutional layers, significantly reducing redundant calculations.

How It Works: The Rol pooling layer takes the feature map and the coordinates of the region proposals. It then pools the corresponding regions of the feature map into fixed-size feature vectors (e.g., 7x7).

### Integrated Classification and Regression:

Single Network Output: After Rol pooling, the fixed-size feature vectors are fed into fully connected layers, which then output both the classification scores (for multiple object classes) and the refined bounding box coordinates.

Multi-task Loss: Fast R-CNN uses a multi-task loss function that combines the classification loss and the bounding box regression loss, allowing the network to be trained end-to-end.

Faster R-CNN: Further improves upon Fast R-CNN by introducing a Region Proposal Network (RPN) that shares convolutional layers with the detection network, significantly speeding up the proposal generation process.

Faster R-CNN is the preferred netwrork, however, all the networks above can be used. The generic name is Region-based Convolutional Neural Network.

### CNN for image classification:

The different CNN architectures each have unique features and strengths tailored for various image classification tasks. Here's a comparative overview highlighting the key differences among some of the prominent networks:
ResNet (Residual Networks)

### Strengths:

Residual Connections: Helps train very deep networks by mitigating the vanishing gradient problem.

Performance: Consistently high accuracy on image classification benchmarks. Variants: ResNet-18, ResNet-50, ResNet-101, ResNet-152 offer different depths depending on computational resources.

Suitable For: High accuracy applications, deeper models when computational resources are available.

### EfficientNet

### Strengths:

Compound Scaling: Efficiently scales depth, width, and resolution to balance performance and efficiency.

State-of-the-Art Accuracy: Excellent performance on benchmarks with optimized resource usage.

Variants: EfficientNet-B0 to B7 offer a range of models from lightweight to very deep. Suitable For: Applications requiring a balance of accuracy and computational efficiency.

### VGGNet

### Strengths:

Simplicity and Depth: Uniform architecture with deep layers using small 3x3 filters.
Performance: Very good accuracy on benchmarks, though computationally expensive.
Variants: VGG16 or VGG19

Suitable For: Applications where simplicity and interpretability are important, with available computational resources.

For Maximum Accuracy: EfficientNet (B7) and ResNet (e.g., ResNet-18, ResNet-50 or ResNet-101) are excellent choices, offering high accuracy with efficient use of resources. For Simplicity and Interpretability: VGG16 is straightforward to implement and understand, suitable if computational resources are not a primary concern.

All of these networks above can be used in our solution.

ResNet-18 offers an excellent balance between model complexity and performance, making it ideal for image classification tasks with images sized 224x224. The residual connections in ResNet-18 help mitigate the vanishing gradient problem, ensuring stable and efficient training. Its 18-layer architecture is less computationally intensive compared to deeper networks, making it easier to train and less prone to overfitting, especially with smaller datasets.

ResNet-18 is also compatible with pre-trained models on large datasets like ImageNet, allowing us to leverage transfer learning effectively. This helps achieve high performance with minimal additional training. Additionally, ResNet-18's strong generalization capabilities and efficient use of computational resources make it a versatile and practical choice for various image classification applications.

Training Faster R-CNN with ResNet-101 backbone and Feature Pyramid Network(FPN) Faster R-CNN training involves several key stages that work together to optimize the network for object detection tasks. The process begins with a pre-trained convolutional neural network (CNN) backbone, such as ResNet, which is fine-tuned on the specific dataset used for detection. This backbone extracts feature maps from the input images. Next, a Region Proposal Network (RPN) is trained to generate region proposals. The RPN slides a small network over the feature maps produced by the backbone, generating multiple anchor boxes of different scales and aspect ratios. For each anchor box, the RPN predicts whether it contains an object and refines its coordinates. During training, the RPN is optimized using a multi-task loss that combines a classification loss (object vs. background) and a regression loss (anchor box refinement).

Once region proposals are generated, they are fed into a Region of Interest (Rol) pooling layer. This layer extracts fixed-size feature maps from the proposals, allowing the next stage of the network to process them efficiently. The Rol pooling ensures that each proposal, regardless of its size, is converted into a fixed-size feature map.

The feature maps from the Rol pooling layer are then passed to a fully connected network that performs object classification and bounding box regression. This network is trained to classify the objects within each proposal and refine the bounding box coordinates further. Like the RPN, this network is optimized using a multi-task loss that combines classification and regression.

During training, the entire Faster R-CNN model, including the backbone, RPN, and the final detection network, is trained end-to-end. The loss from both the RPN and the detection network is backpropagated through the entire network, allowing the backbone to learn feature representations that are useful for both region proposal generation and object detection.

Finally, during inference, the trained Faster R-CNN model takes an input image and processes it through the backbone to generate feature maps. The RPN then generates region proposals, which are refined and classified by the final detection network to produce the final object detections with corresponding bounding boxes and confidence scores.

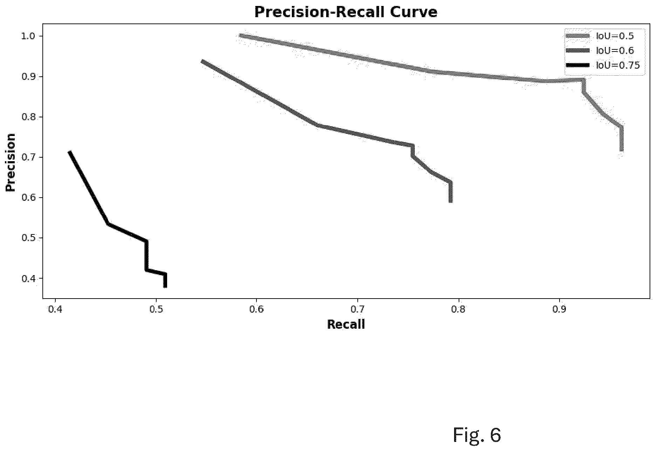

Precision and Recall are fundamental metrics used to evaluate the performance of object detection models like Faster R-CNN. These metrics help us understand how well the model is performing in terms of identifying true positive detections (correct detections) and avoiding false positives (incorrect detections), see example in Fig. 6.

Precision: Precision is the ratio of correctly predicted positive observations to the total predicted positives. It tells us how many of the predicted bounding boxes are correct.$Precision = True Positives / True Positives + False Positives$

Recall: Recall is the ratio of correctly predicted positive observations to all the observations in the actual class. It measures the model's ability to find all the relevant instances.$Recall = True Positives / True Positives + False Negatives$

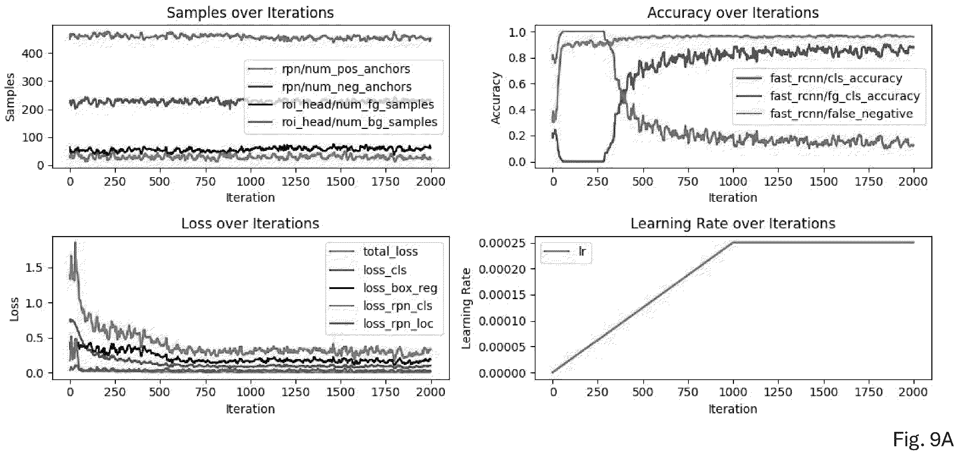

Fig. 9A illustrates various iterations.

### Samples over iterations:

rpn/num_pos_anchors (Red Line): Number of positive anchors selected by the Region Proposal Network (RPN) in each iteration. Positive anchors are those that have a high overlap with the ground truth boxes.
rpn/num_neg_anchors (Blue Line): Number of negative anchors selected by the RPN in each iteration. Negative anchors are those that do not have a high overlap with any ground truth boxes.
roi_head/num_fg_samples (Black Line): Number of foreground (positive) samples selected by the ROI head in each iteration. Foreground samples are those proposals that are likely to contain objects.
roi_head/num_bg_samples (Green Line): Number of background (negative) samples selected by the ROI head in each iteration. Background samples are those proposals that are not likely to contain objects.
Stability of Samples: The number of positive and negative samples, both for the RPN and ROI head, is stable. This suggests consistent sampling, which is good for reliable training.

### Accuracy over Iterations:

fast_rcnn/cls_accuracy (Red Line): Classification accuracy of the Fast R-CNN component. This measures how accurately the model classifies objects into their respective categories.
fast_rcnn/fg_cls_accuracy (Blue Line): Classification accuracy for the foreground classes (excluding background). This measures how accurately the model classifies the detected objects.
fast_rcnn/false_negative (Green Line): The rate of false negatives, which are instances where the model fails to detect an object that is present.
Classification Accuracy: The overall classification accuracy (red line) is high and stable, which is a positive sign.
Foreground Classification Accuracy: The foreground classification accuracy (blue line) is lower than the overall accuracy but shows improvement over time. This indicates the model is learning to distinguish objects but still has room for improvement.
False Negatives: The false negative rate (green line) decreases over time, which is good as it indicates the model is getting better at detecting objects that are present.

### Loss over Iterations:

total_loss (Red Line): The overall loss of the model, which combines classification loss, bounding box regression loss, RPN classification loss, and RPN localization loss.
loss_cis (Blue Line): The classification loss of the Fast R-CNN component, which measures the error in classifying objects.
loss_box_reg (Green Line): The bounding box regression loss of the Fast R-CNN component, which measures the error in predicting the coordinates of the bounding boxes.
loss_rpn_cls (Black Line): The classification loss of the RPN, which measures the error in distinguishing between object and non-object proposals.
loss_rpn_loc (Purple Line): The localization loss of the RPN, which measures the error in adjusting the anchor boxes to fit the objects.
Total Loss: The total loss decreases significantly in the initial iterations and then stabilizes, which indicates the model is learning.
Component Losses: All component losses (classification, bounding box regression, RPN classification, and RPN localization) decrease over time, suggesting that each part of the model is learning effectively.

### Learning Rate over Iterations:

Ir (Red Line): The learning rate of the model over iterations. The learning rate determines the size of the steps the optimizer takes when updating the model parameters.

### Training Resnrt-18 CNN

Training ResNet-18 involves several key stages that work together to optimize the network for image classification tasks. The process begins with a pre-trained convolutional neural network (CNN) backbone, such as ResNet-18, which is fine-tuned on the specific dataset used for classification. This backbone extracts feature maps from the input images.

Next, the feature maps are passed through a series of residual blocks. Each block consists of two convolutional layers with batch normalization and ReLU activation. These residual blocks help mitigate the vanishing gradient problem by allowing the network to learn residual functions with reference to the layer inputs, improving the training of deep networks.

During training, the model is initialized with a modified final fully connected layer to match the number of classes in the dataset. The input images are preprocessed with resizing, normalization, and data augmentation techniques such as random flips and rotations to increase the diversity of the training data.

A loss function, typically Cross-Entropy Loss, is used to measure the discrepancy between the predicted class probabilities and the actual class labels. An optimizer, such as Stochastic Gradient Descent (SGD) or Adam, is employed to update the model weights. The optimizer adjusts the learning rate, momentum, and weight decay parameters to ensure efficient training.

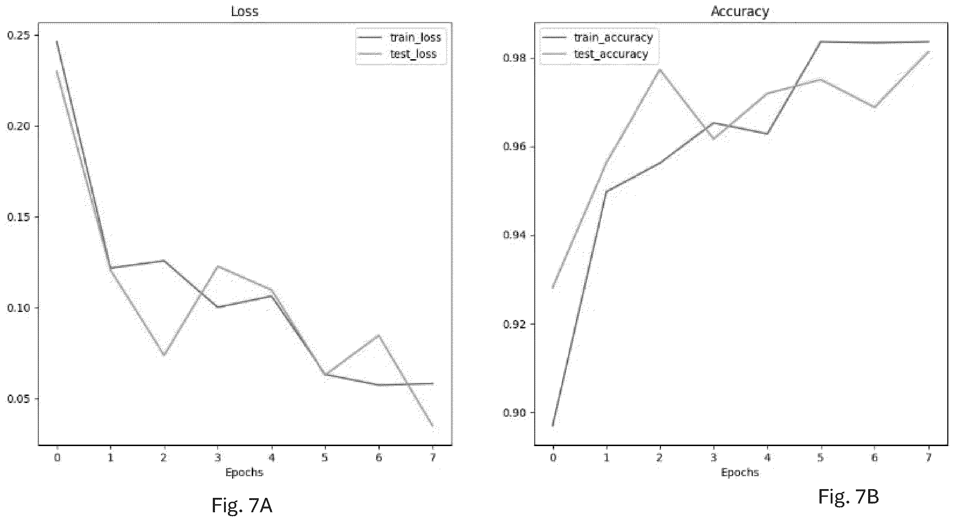

The training process, as illustrated in Figs. 7A and 7B, involves a forward pass, where input images are fed into the model to obtain predictions. The loss is then computed based on these predictions and the ground truth labels. A backward pass follows, where gradients are calculated and propagated back through the network. The optimizer updates the model weights accordingly.

The training loop continues for multiple epochs, where the model iteratively learns from the training data. After each epoch, the model's performance is evaluated on a validation set to monitor metrics such as accuracy, precision, and recall. Learning rate scheduling techniques are often employed to adjust the learning rate during training, helping the model converge more effectively.

This end-to-end training approach ensures that the ResNet-18 model learns to extract meaningful features from images, improving its accuracy and robustness for image classification tasks.

Train Loss: Training loss is a measure of how well the model is performing on the training dataset. It is computed by applying a loss function (such as Cross-Entropy Loss for classification tasks) to the predictions made by the model on the training data and the actual target values (labels). The training loss quantifies the error the model makes on the training data. It tells us how well the model is learning from the data it is being trained on.

The training loss is used in the following way.

### Forward Pass:

The training data is fed into the model.

The model generates predictions based on its current parameters.

### Loss Calculations:

The predictions are compared to the actual labels using a loss function.

The loss function calculates the error (loss) between the predicted values and the actual values.

### Backward Pass:

The gradients of the loss with respect to the model's parameters are computed.

These gradients are used to update the model's parameters in a way that reduces the loss.

### Epochs and Batches:

The process is repeated for multiple epochs (complete passes through the training dataset).

Within each epoch, the data is processed in batches to make the training process more efficient.

During training, the model's parameters (weights) are adjusted to minimize the training loss. This process is known as optimization. Monitoring the training loss helps us understand how well the model is learning. A decreasing training loss indicates that the model is improving its predictions on the training data.

Test Loss: Test loss is a measure of how well the model is performing on a separate dataset that was not used during the training process. It is computed by applying a loss function (such as Cross-Entropy Loss for classification tasks) to the predictions made by the model on the test data and the actual target values (labels). The test loss quantifies the error the model makes on the test data. It tells us how well the model is generalizing to new, unseen data.

The test loss is used in the following way.

### Forward Pass:

The test data is fed into the trained model.

The model generates predictions based on its learned parameters.

### Loss Calculations:

The predictions are compared to the actual labels using a loss function.

The loss function calculates the error (loss) between the predicted values and the actual values.

### Evaluation:

The computed loss values for all test data points are averaged to obtain the overall test loss. This average test loss provides a measure of the model's performance on unseen data.

### Epochs and Batches:

The test loss is evaluated at the end of each epoch during the training process to monitor generalization.

The test data is processed in batches to efficiently compute the test loss.

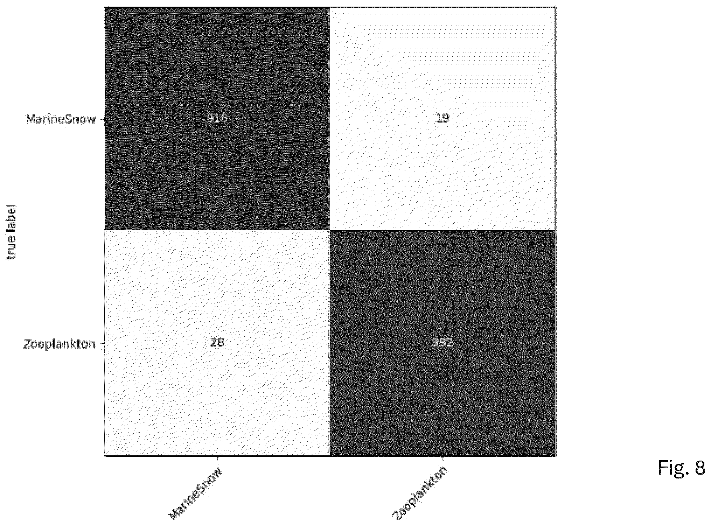

The Confusion Matrix, see Fig. 8:
A confusion matrix is a tabular representation of the performance of a classification model. It shows the counts of true positive, true negative, false positive, and false negative predictions. This matrix helps you understand how well your model is performing in terms of correctly and incorrectly classified instances.

In the example provided in Fig. 8, the following counts are given:
(1,1) True Positive (TP) for MarineSnow: 916 instances correctly predicted as MarineSnow.
(1,2) False Negative (FN) for MarineSnow / False Positive (FP) for Zooplankton: 19 instances where MarineSnow was incorrectly predicted as Zooplankton.
(2,1) False Positive (FP) for MarineSnow / False Negative (FN) for Zooplankton: 28 instances where Zooplankton was incorrectly predicted as MarineSnow.
(2,2) True Positive (TP) for Zooplankton: 892 instances correctly predicted as Zooplankton.

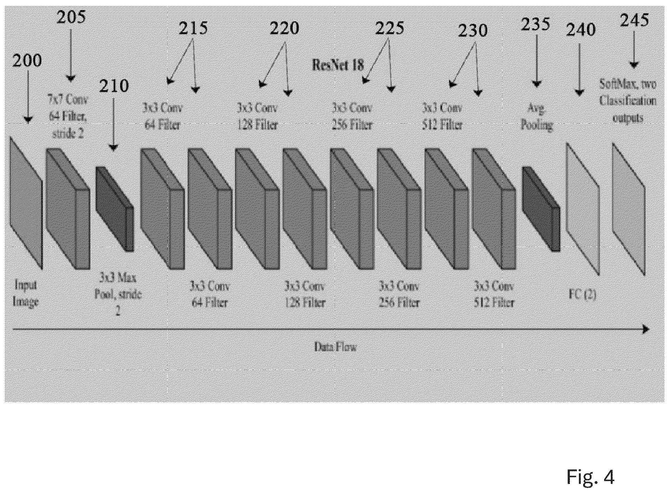

Fig. 4: shows a schematic view of processing.

200: Input image: input image may be of size 256 × 256.

205: 7x7 Conv is the kernel size that performs a dot product operation between the filter weights and the local patch of the image it covers at every position. The output of this layer will have 64 different feature maps. A stride of 2 means the filter moves 2 pixels to the right and down after each operation, this reduces the spatial dimension of the output feature maps by half.

210: 3x3 is the size of the pooling window, the maximum value from the subset of the image covered by 3x3 window is selected and output to the next layer. The purpose of max pooling is to reduce the dimensionality of the input feature maps, making the output feature maps more robust to the exact locations of features in the input space. It emphasizes the strongest features, passing only the most prominent signals forward. The stride in a pooling layer determines how the pooling window moves across the input feature map. A stride of 2 means that the pooling window moves 2 pixels to the right (and down) for each step it takes.

215: 3x3 Conv 64 filter: This filter slides over the input, it performs a convolution operation at each position. This operation involves multiplying the values of the filter by the corresponding values of the input it covers at that moment, summing up all these products to produce a single output value. This value is a feature detected by the filter at that specific location on the input. There are 64 of these filters each potentially learning to detect different types of features in the input. Each potentially learning to detect different types of features in the input. Using multiple convolutional layers in succession increases the depth of the network, allowing it to learn more complex features.

220: Same as 215 except the 3x3 conv filter is on 128 feature maps.

225: Same as 215 except the 3x3 conv filter is on 256 feature maps.

230: Same as 215 except the 3x3 conv filter is on 512 feature maps.

235: Avg pooling: The average pooling layer reduces each feature map's spatial dimensions to a single value. If it's a global average pooling layer, it computes the average of all elements in each feature map. This significantly reduces the number of features, transitioning from a high-dimensional feature map to a more compact, lower-dimensional form. By averaging the values in each feature map, the layer effectively summarizes the presence of detected features over the entire spatial area of the input. This summary captures the essence of the input as processed through the multiple convolutional and residual layers of the network.

240: FC: A Fully Connected layer, also known as a dense layer where every input is connected to every output by a learnable weight. This layer's primary function is to take the high-level, abstracted features from the convolutional layers and learn non-linear combinations of these features. The FC layer integrates the features that have been abstracted and pooled by the preceding layers into a format suitable for classification.

245: Softmax: The output of the Softmax function provides a probabilistic distribution across all potential classes for a given input. This means each entry in the output vector of the Softmax function is the model's probability estimate that the input image belongs to a particular class.

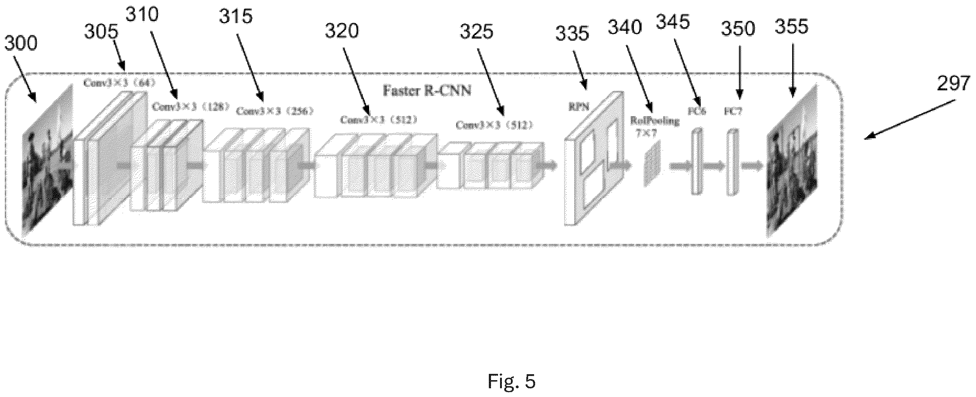

Fig. 5 shows a schematic representation of analyzing taxa. The system may include a camera that captures a sequence of input data images. These images are then inputted into the processor unit, which executes the computer-implemented method.

The method is designed for identifying and categorizing at least one suspended particle in each image of the input data sequence. This identification and categorization may include taxonomic identification, where the particles are classified based on their taxonomic characteristics.

To aid in this process, a neural network is trained to identify regions of interest in each image.

Once the particles are identified and categorized, the method tracks these particles in subsequent images of the sequence. This tracking is based on the bounding box obtained around each particle in the initial identification step. The tracking data provides information on the movement and behavior of the particles over time.

The classification data obtained during the identification step, along with the tracking data, is then used to generate a profile of the suspended particles in the taxa. This profile may include biomass calculations and the status of the ecosystem by extracting live organic matter. The profile provides valuable insights into the composition and dynamics of the particles in the taxa.

In addition to the image data, each image in the sequence also includes metadata from sensors. This metadata, which may include information such as depth, chlorophyll-a, salinity, and temperature, is synchronized with the profile to obtain a characterization of the environmental conditions during the particle profiling process.

The method utilizes convolutional operations on the entire image to perform the identification and categorization steps. This allows for efficient processing of the input data images.

To ensure accurate tracking, the method excludes bounding box-related non-particles, such as bubbles and damaged regions, from the tracking process. This helps to maintain the integrity of the tracking data and improve the accuracy of the profile generated.

Fig. 5 schematic view of the model for detecting particles. The model includes capturing a sequence of input data images. These images are then inputted into the processor unit, which executes the computer-implemented method.

The method begins by identifying and categorizing at least one suspended particle in each image of the input data sequence. This identification and categorization may include taxonomic identification, where the particles are classified based on their taxonomic characteristics.

To aid in this process, a first neural network is trained to identify regions of interest in each image.

Once the particles are identified and categorized, the method tracks these particles in subsequent images of the sequence. This tracking is based on the bounding box obtained around each particle in the initial identification step. The tracking data provides information on the movement and behavior of the particles over time.

The classification data obtained during the identification step, along with the tracking data, is then used to generate a profile of the suspended particles in the taxa. This profile may include biomass calculations and the status of the ecosystem by extracting live organic matter. The profile provides valuable insights into the composition and dynamics of the particles in the taxa.

In addition to the image data, each image in the sequence also includes metadata from sensors. This metadata, which may include information such as depth, chlorophyll-a, salinity, and temperature, is synchronized with the profile to obtain a characterization of the environmental conditions during the particle profiling process.

The method utilizes convolutional operations on the entire image to perform the identification and categorization steps. This allows for efficient processing of the input data images.

To ensure accurate tracking, the method excludes bounding box-related non-particles, such as bubbles and damaged regions, from the tracking process. This helps to maintain the integrity of the tracking data and improve the accuracy of the profile generated.

In the example illustrated in Fig. 5 all the conv 3x3 is the resnet 101, there are 101 layers here, those feature maps are the input to the RPN like you are describing herein.

Fig. 5 illustrates the following part of a branch 297:
- Input Image 300: The raw input fed into the network for processing.
- Convolutional Layers 305-330: Sequential layers applying convolutional operations to extract features from the input image at various levels of complexity.
- Region Proposal Network (RPN) 335: Identifies regions within the feature maps that likely contain objects of interest.
- 340: This is a component of the Faster R-CNN architecture designed to generate region proposals. These proposals are candidate areas within the image that may contain objects. The RPN scans the feature map produced by the preceding convolutional layers to predict object boundaries and objectness scores, which indicate how likely it is that each proposed region contains an object.
- RolPooling - 345: Typically found after the RPN, RolPooling (Region of Interest Pooling) is a process that extracts a fixed-size feature vector from the feature map for each region proposal, ensuring that subsequent layers receive uniformly sized input. This operation allows the network to handle input images of varying sizes and for aligning the extracted features with the proposed regions. If RolPooling is present, it would be part of the sequence that processes the region proposals from the RPN to prepare them for classification and bounding box regression in the fully connected layers. In an updated context with Robust Faster R-CNN, RolPooling might be replaced by the more precise RolAlign method.
   The Rol Pooling 340, may use four RoiAlign layers. Each ROIAlign layer operates on different scale of the feature pyramid. For each ROI, the ROIPooler selects the appropriate ROIAlign layer based on the size of the ROI. The spatial scale parameter helps in determining which level of the feature pyramid to use. By using multiple ROIAlign layers at different spatial scales, the ROIPooler can handle objects of various sizes more effectively. Small objects can be pooled from higher-resolution feature maps, while larger objects can be pooled from lower-resolution maps.
- Fully Connected Layers (FC6 and FC7) 345-350: Higher-level processing that outputs classification and location information of the objects detected in the input image.
- Final Output 355: The endpoint of the primary branch, yielding initial object detection results.

Branch 297 could have further branches connected such as a second branch for refinement. The second branch could include:
- Convolutional Layers for processing an image in parallel to the branch 297, possibly at different scales or applying different filters, to extract additional features.
- Concatenation Operation to combine feature maps from both the primary branch 297 and refinement branches.
- Region Proposal Network and Multi-Scale RolAligns: Use the combined features to generate refined region proposals.
- Fully Connected Layers (such as FC6 and FC7): Perform final classification and localization of the objects within the image.

Outputs the final, refined detections from the refinement branch to the primary branch 297.

Further branches could be added to do, for example Specialized Feature Extraction. A branch for may Specialized Feature Extraction may focus on extracting features that are not captured by the other other branches, such as textural details, color histograms, or other image descriptors that require distinct processing.

Contextual Analysis: This branch could analyze broader contextual information from the scene that helps in understanding the relationship between objects or background patterns, which is useful for distinguishing between foreground and background, especially in cases of occlusion.

Scale Normalization: Given the importance of multi-scale detection, branch 299 might work on normalizing features across different scales, making sure that objects of various sizes are equally detectable regardless of their distance from the camera or their actual size in the image.

Occlusion Handling: further branches might specifically address the challenge of occlusions by focusing on partial feature sets and employing strategies to predict the whole form of partially visible objects.

Adversarial Training: If the network is being trained with an adversarial component to improve robustness, further branches may generate adversarial examples that help the network learn to cope with difficult-to-detect objects and occlusions.

Error Correction or Validation: further branches may serve as an error correction or validation mechanism, assessing the outputs of the other branches and providing a 'second opinion' to improve the overall accuracy of the system.

Auxiliary Tasks: further branches may handle tasks auxiliary to object detection, such as semantic segmentation, instance segmentation, or depth estimation, which can provide additional cues for accurate object detection.

The specific operation of further branches would be determined by the goals of the network and the particular challenges it's designed to overcome. In a complex environment like underwater detection, where organisms can vary widely in appearance and scale, and where they may often be partially obscured, having a dedicated branch for addressing these challenges can significantly enhance the robustness and accuracy of the detection system.

Fig. 7A: shows a diagram that illustrates a mode of the software of the application, in particular Fig. 7A presents a line graph depicting the training and testing loss of a machine learning model over several epochs. This graph is typically used to evaluate the performance of a model over time.
- Training Loss (train_loss): Indicated by the blue line, it represents the error or loss of the model on the training dataset as it learns during the training process. A decreasing trend in training loss signifies that the model is effectively learning from the dataset.
- Testing Loss (test_loss): Shown by the orange line, this represents the error or loss of the model on a separate testing dataset not seen during training. It's crucial for assessing how well the model generalizes to new, unseen data.
- Epochs: The horizontal axis shows the number of complete passes through the entire training dataset (epochs). As the number of epochs increases, both the training and testing loss generally decrease, indicating the model is learning and improving its predictions.
- Loss Values: The vertical axis quantifies the loss. The goal is to minimize this value, which indicates the difference between the predicted output of the model and the actual target values.

The plot demonstrates that as the model goes through more epochs, the loss decreases, which is desirable in a learning curve. However, the fluctuations in the testing loss suggest that the model may be facing some variability in generalizing, which could be a focus for further refinement. The graph can be used by data scientists to diagnose issues such as overfitting, underfitting, or to decide when the model has been trained sufficiently.

Figure 7A shows a schematic representation of the computer implemented method for profiling particles in a taxa according to claim 1. The method involves several steps to obtain a profile of suspended particles in a taxa based on a sequence of input data images.

Fig. 7B shows another diagram that illustrates the software of the application, in particular Fig. 7B is a line graph illustrating the accuracy of a machine learning model on both the training and testing datasets across several epochs.
- Training Accuracy (train_accuracy): Represented by the blue line, this metric indicates how accurately the model predicts the outcomes for the dataset it was trained on. The graph shows an increasing trend, suggesting that the model is becoming better at fitting the training data with each epoch.
- Testing Accuracy (test_accuracy): The orange line represents the model's accuracy on a separate, unseen testing dataset. This measures the model's ability to generalize what it has learned to new data.
- Epochs: On the horizontal axis, we see the number of epochs, which represent complete cycles through the entire training dataset.
- Accuracy Values: The vertical axis measures accuracy, ranging from 0 to 1, where 1 indicates perfect accuracy. Values close to 1 are typically desired, indicating high levels of correct predictions.
-

The plot shows that as the model is exposed to more epochs, both training and testing accuracy improve, signifying learning and adaptability. However, there are dips and variations in the testing accuracy, which may point to moments when the model's generalization falters slightly. These fluctuations can provide insights into the stability of the model's learning over time. Overall, high accuracy levels, as shown in the graph, are indicative of a well-performing model, which is crucial for tasks such as the identification of marine life in the MarPar software system.

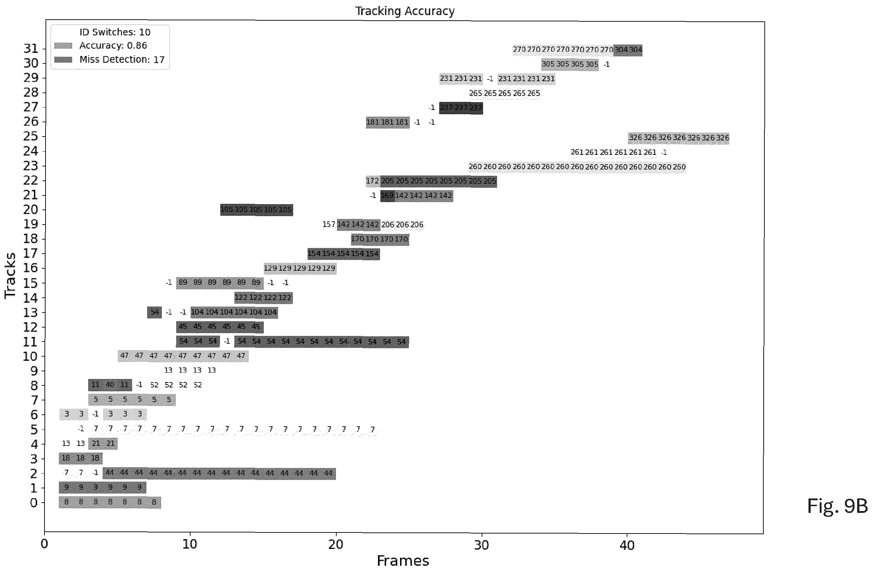

Fig. 9B: shows a classification done by the software of the application, in particular Fig. 8 showcases a confusion matrix, a tool commonly used to evaluate the performance of a classification algorithm.
- Matrix Structure: The confusion matrix is a square matrix that compares the actual target values with those predicted by the machine learning model. It helps in understanding the accuracy of a classification model.
- Classes: There are two classes in this matrix: 'MarineSnow' and 'Zooplankton', representing the types of objects that the MarPar software system aims to classify.
- True Positive (Top Left Square): For the 'MarineSnow' class, there are 916 instances correctly predicted, which means that 916 times the model correctly identified the presence of marine snow.
- False Negative (Bottom Left Square): The model incorrectly predicted 28 instances of marine snow as zooplankton, these are false negatives for the marine snow class.
- False Positive (Top Right Square): There are 19 instances where the model incorrectly predicted zooplankton as marine snow, these are false positives for the zooplankton class.
- True Negative (Bottom Right Square): The model correctly identified 892 instances of zooplankton, which are true negatives for the marine snow class and true positives for the zooplankton class.

The confusion matrix is an essential diagnostic tool in machine learning as it provides insight not only into the errors being made by a classifier but also into the types of errors. A high number of true positives and true negatives relative to false positives and false negatives indicate good classifier performance. In the context of the MarPar software, the confusion matrix suggests that the model is quite accurate, with a high number of true positives and true negatives for both classes, and relatively few false positives and false negatives.

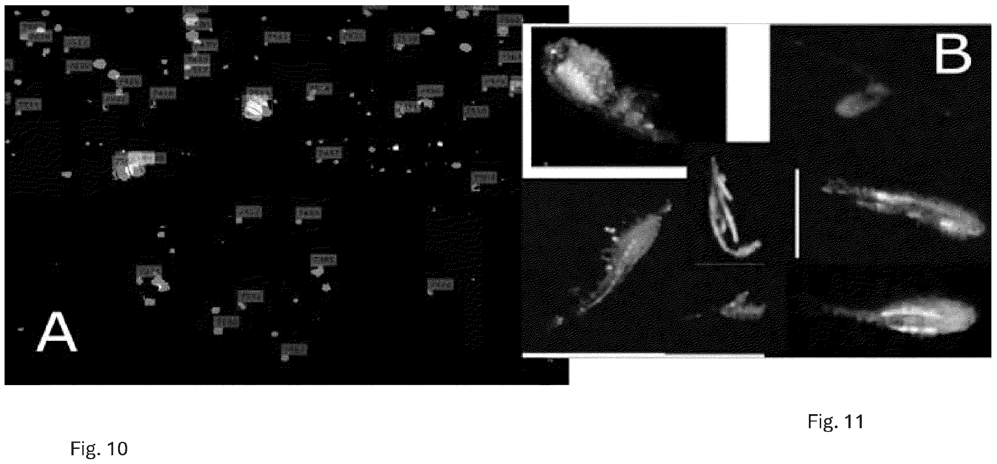

Fig. 10: shows a tracking accuracy diagram of the software of the application, in particular Fig. 10 presents a tracking accuracy plot, which visualizes the performance of an object tracking algorithm over a sequence of video frames.
- Tracks (Y-Axis): Each horizontal line represents a unique track, identified by a number, over time. The tracks correspond to individual entities that the algorithm is following, such as specific marine organisms.
- Frames (X-Axis): The horizontal axis denotes the frame number within the video sequence. Each frame is a snapshot in time during the video recording.
- ID Switches: Noted in the plot, ID switches indicate instances where the tracking algorithm has erroneously changed the identity of a tracked object from one frame to the next. There are 10 ID switches noted, suggesting there were ten occurrences where the tracking algorithm lost and then re-acquired an object, possibly mistaking it for another.
- Miss Detection: This metric shows how many times the algorithm failed to detect an object present in a frame. In this plot, there are 17 missed detections.
- Accuracy: The accuracy of the tracking algorithm is quantified as 0.86, which can be interpreted as the algorithm correctly tracking the object 86% of the time over the sequence.
- Colored Squares: Each square represents a detection of an object in a frame, and the color denotes different objects. Continuity in color across frames indicates successful tracking of an object.
- Number Labels: These are identifiers for the detected objects. The numbers should ideally be consistent across the sequence for accurate tracking. Discontinuities in these labels could indicate tracking errors or ID switches.

Fig. 10 is vital for assessing the performance of tracking algorithms, particularly in complex environments like underwater scenes where marine life moves rapidly and often unpredictably. The overall high accuracy score suggests that the MarPar software is competent in tracking objects over time, despite some errors indicated by ID switches and missed detections.

Fig. 10: shows an image with multiple classified bounding boxes, in particular Fig. 10 - illustrates the Automated Detection and Identification:
- Panel A: This panel exhibits an underwater scene with numerous particles detected by the MarPar software's Al system. Each particle is tagged with a unique identifier, which aids in tracking and analyzing individual entities across frames.
   - Detected Particles: Highlighted with bounding boxes and reference numbers, indicating the AI's recognition and labeling of each entity in the underwater environment.
   - Background: The dark backdrop represents the underwater setting where the particles are suspended, demonstrating the software's capability to discern entities within a challenging and complex visual field.

Fig. 11: an enlarged view of a section of Fig. 10, in particular Fig. 11 illustrates the Detailed Classification:
- Panel B: Shows a series of zoomed-in images of various aquatic organisms detected by the MarPar software.
   - High-Resolution Imagery: Each image provides a detailed view of the organisms, showcasing the software's ability to classify and differentiate between various species based on visual characteristics.
   - Diversity in Species: The assortment of organisms illustrates the AI's classification versatility, crucial for biodiversity studies and ecological assessments in marine research.

In combination, Figs. 10 and 11 demonstrate the MarPar software's comprehensive process, from broad-scale detection and identification in an underwater environment to the close-up classification of individual species. This advanced capability facilitates extensive ecological monitoring and analysis, contributing significantly to the field of marine biology.

Fig. 12: shows an overview of a device for carrying out the method of the application , in particular Fig. 12 displays the hardware component of the MarPar system, an underwater sensor optical system utilized for capturing high-resolution video data for in situ vertical profiling in aquatic environments.
- Camera 210: This is the main imaging component, a high-resolution camera encased in a waterproof housing, allowing for clear and detailed video capture underwater.
- Flashlight 220: Attached to the system, this light source is essential for illuminating the camera's field of view, particularly in the dark depths of aquatic environments.
- Battery 230: The power source for the system, ensuring that both the camera and flashlight can operate for extended periods underwater.
- Electronics 240: These components control the camera's functions, process the captured video data, and manage communications with surface systems.
- Temperature-depth system 250: A sensor that records temperature and depth, providing valuable environmental context to the visual data.
- Nitrite sensor 260: Measures nitrite levels in the water, which can be an important indicator of water quality and marine ecosystem health.
- Yoda brush 270: Used to slow down the descend of the camera system. May also allow a more stable straight down sinking path.
- Line 280: Used for deploying and retrieving the sensor system from the water ensuring secure operations.
- Sensor Optical System 20: Refers to the entire assembly, which is a cohesive unit designed for robust underwater exploration and data collection.

For successful profiling of a sea or lake, the camera system needs to be attached to a winch and line and manually sunken to the desired depth. The depth the camera system is dropped to is calculated by the ships depth meter(system). The targeted depth is then communicated with the person controlling the winch, target depth is a determined distance, such as about 10 m, from the bottom, so the camera system does not collide with the bottom resulting in a damaged ore entangled optical system. The profiling with the winch may be automated. In some examples a winch may not used on smaller vessels.

The identification and categorization of particles are performed using convolutional operations on the entire image, ensuring comprehensive analysis. However, non-particle elements, such as bubbles and damaged regions, are excluded from the tracking process by considering only the particles within the bounding box.

Fig. 12 provides a practical overview of the MarPar system's hardware setup, demonstrating its capability to operate in challenging underwater conditions while collecting vital data for marine research. This equipment is integral to the MarPar software's ability to analyze marine life and its environment accurately.

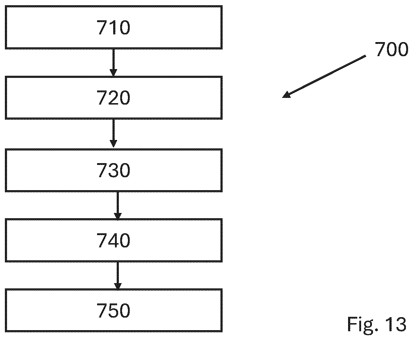

Fig. 13 shows a schematic illustration of method, which may be computer implemented, for detecting and/or tracking oceanic eddies 700. Eddy activity has been extensively studied across many regions of the worlds oceans, with a particular focus on surface eddies. Surface eddies are known to significantly influence the suppression of biochemical tracers through offshore transport and subduction from coastal regions.

There has been growing evidence that surface mesoscale eddies in the eastern boundary upwelling systems play an important
role in the offshore transport and subduction of nutrients supplied by the coastal upwelling and associated organic carbon, leading to the suppression of biological productivity. The offshore transports of nutrients are attributed mostly to slightly dominated surface cyclones, while they travel westward after entraping the nutrient rich upwelled water.

The method includes:
receiving input data 710 comprising oceanic velocity and position measurements, such as at multiple time steps;
initializing a state vector 720 representing an eddy's position and velocity, wherein the initial velocity is set to zero;
updating the state vector 730;
associating detected eddies 740 with existing tracks based on cost matrices evaluating intersection-over-union, vorticity consistency, and radius similarity; and
outputting detected and tracked eddies 750, including their positions, velocities, and vorticities.

The method may further include that the association of detected eddies with existing tracks is performed using three cost matrices, the first representing the intersection-over-union (IoU) between tracked and detected eddies, the second representing vorticity similarity, and the third representing radius similarity, wherein detections with costs exceeding a predefined threshold are excluded from tracking, and/or wherein an eddy is classified as cyclonic or anticyclonic based on the sign of its relative vorticity, computed as the difference between the meridional velocity gradient in the zonal direction and the zonal velocity gradient in the meridional direction.
The method may also include filtering detected eddies based on a minimum lifetime threshold, such that only eddies persisting for more than a predefined duration are retained in the tracking output.
The method may also include filtering out unassigned tracks and initializing new tracks for unmatched detections; and/or applying the Hungarian algorithm to optimize the assignment of eddy detections to tracked eddies; and/or applying a Kalman filter to iteratively update the state-vector, such as wherein the Kalman filter iteratively updates the state vector by:
   predicting the eddy's next position using a state transition matrix,
   updating the prediction with newly received position measurements,
   computing a covariance matrix to quantify uncertainty in the estimation, and refining the prediction using a measurement noise matrix and a process noise matrix.

In some examples, a Kalman filter may be used to track eddies based on their position (latitude and longitude) and velocity (latitude and longitude). The Kalman filter is initialized with the eddy's position and a zero velocity, since in most cases upon first detection there is no information about the direction in which it is moving. The Kalman filter may then used to predict the eddy's new position based on its previous movement, and it updates the position with a new position if that track is associated with one of the detections in next batch of detections.

The Kalman filter works with following:
State Vector (x): Encapsulates the position and velocity in the latitude and longitude dimensions. ${x}_{k} = \left[\begin{matrix}{x}_{k} \\ {\dot{x}}_{k} \\ {y}_{k} \\ {\dot{y}}_{k}\end{matrix}\right]$

Where *xₖ* and *yₖ* are the positions at time step *k*, and *ẋₖ* and *ẏₖ* are the velocities.

State Transition Matrix (F): The motion model with constant velocity, which governs how the state evolves from one time step to the next: $F = \left[\begin{matrix}1 & Δ t & 0 & 0 \\ 0 & 1 & 0 & 0 \\ 0 & 0 & 1 & Δ t \\ 0 & 0 & 0 & 1\end{matrix}\right]$

This matrix updates the position based on the velocity, where Δ t is the time step between measurements.

Measurement Model (H): The measurement matrix relates the state vector to the observed measurements. $H = \left[\begin{matrix}1 & 0 & 0 & 0 \\ 0 & 1 & 0 & 0\end{matrix}\right]$

Current State Covariance Matrix (P): The covariance matrix that represents the uncertainty in the state estimation. Each entry in this matrix gives information about the confidence or uncertainty in the estimated values for the state variables $P = \left[\begin{matrix}0.01 & 0 & 0 & 0 \\ 0 & 0.01 & 0 & 0 \\ 0 & 0 & 0.01 & 0 \\ 0 & 0 & 0 & 0.01\end{matrix}\right]$ confidence matrix for the initial state.

### Measurement Noise Matrix (R):

$R = \left[\begin{matrix}0.01 & 0.00 \\ 0.00 & 0.01\end{matrix}\right]$

### Process noise matrix (Q):

$Q = \left[\begin{matrix}1 & 0 & 0 & 0 \\ 0 & 1 & 0 & 0 \\ 0 & 0 & 1 & 0 \\ 0 & 0 & 0 & 1\end{matrix}\right]$

Prediction Step: In the predict step, the Kalmar-filter forecasts the next state based on the current state and the state transition matrix.

The next state estimate *x̂*_{*k*|*k*-1} is computed using the state transition matrix F ${\hat{x}}_{k \left|k-1\right.} = F ⋅ {\hat{x}}_{k}$

This step propagates the current state forward, predicting where the object will be in the next time step. The covariance matrix is updated to reflect the increased uncertainty due to the prediction process: ${P}_{k \left|k-1\right.} = F ⋅ {P}_{k} ⋅ {F}^{T} + Q$ where Q is the process noise covariance, which accounts for uncertainty in the state transition model F. Update Step: When a new measurement is available, the update step corrects the predicted state: Given a new measurement ${z}_{k} = \left[\begin{matrix}{z}_{x} \\ {z}_{y}\end{matrix}\right]$, the filter computes the difference between the actual and predicted measurements. ${y}_{k} = {z}_{k} - H ⋅ {\hat{x}}_{k \left|k-1\right.}$

The Kalman gain Kk is calculated to determine how much to trust the measurement: ${K}_{k} = {P}_{k \left|k-1\right.} {H}^{T} {\left(H {P}_{k \left|k-1\right.}{H}^{T}+R\right)}^{- 1}$

The state estimate is updated by combining the prediction and the measurement, weighted by the Kalman gain: ${\hat{x}}_{k} = {\hat{x}}_{k \left|k-1\right.} + {K}_{k} ⋅ {y}_{k}$

Finally, the covariance matrix is updated to reflect the reduced uncertainty after incorporating the measurement: ${P}_{k} = \left(I-{K}_{k}⋅H\right) ⋅ {P}_{k \left|k-1\right.}$

To associate the correct detection with an existing track, vorticity and radius as association criteria may be used. Three cost matrices may be used to guide this process. The first matrix may calculate the Intersection over Union (IoU) between each tracked eddy's circle and every detected eddy's circle, populating the matrix with values, such as ranging from 0 to 1. Should the cost need to be the lowest cost, 1 can be subtracted from these values.

The other two cost matrices may be used to exclude certain detections. The second matrix handles vorticity: if the tracked eddy has positive vorticity and a detected eddy also has positive vorticity, a cost of a low value, for example 1, may be assigned. However, if they have opposite vorticities, a cost of a high value, for example 1000, may be assigned. The third matrix may handle the radius: if the difference in radius between a tracked eddy and a detected eddy is greater thana certain percentage, such 7%, a cost related to the higher value, such as 1000, may be assigned, otherwise, a cost of the lower value, such as 1, may be used.

Next, the first cost matrix may be populated with the higher value, such as 1000, for all cases where the value in either of the other two matrices is associated with the higher value, flagging those particular detection-track pairs as unsuitable for association. The Hungarian algorithm may then be employed to find the optimal match between tracks and detections, resulting in an assignment list where each item contains the index of a track and the corresponding detection.

These indices in the first cost matrix may also be checked, and if any value is related to the higher value, such as 1000, (which will only occur if all detection costs are related to the higher value), those indices are removed from the assignment list. These removed tracks may then be added to an unassigned tracks list, and those tracks will be deleted, with their data exported. The corresponding detections may be moved to an unassigned detections list, and these will initialize new tracks. Every track which is not in the assignment list, it is deleted, and later the data exported, while every detection not in the assignment list may initialize a new track.

Alternatively, to identify eddies the Okubo-Weiss (OW) parameter may be employed $OW = 4 \left[{\left(\frac{\partial u}{\partial x}\right)}^{2}+\frac{\partial υ}{\partial x}\frac{\partial u}{\partial y}\right] ,$

Where *u* and *v* represent the zonal and meridional velocities, respectively, while *x* and *y* denote respective, zonal and meridional coordinate.

The OW parameter is instrumental in differentiating the two-dimensional flows between the rotating regime (OW< 0), and the deformation regime (OW> 0). For both surface and subsurface eddies, closed contours of a defined value, for example OW at -2× 10-11 (s-2), were searched for.

To determine whether the detected eddy is cyclonic or anticyclonic, the vertical component of relative vorticity ζ were calculated. $ζ = \frac{\partial υ}{\partial x} - \frac{\partial u}{\partial y} .$

The detected eddy is cyclonic (ζ < 0) with clockwise currents or anticyclonic (ζ > 0) with anticlockwise currents. Note that the convention is in the Southern Hemisphere. For eddy detection in the surface layers, averaged OW values within a defined depth, such as top 50 m, were used. Subsurface eddy detection was defined as the averaged OW parameter within a defined density layers, such as σ_{θ} =25.5-26.5 kg m⁻³, to outline their contours. To ensure clear differentiation between surface and subsurface eddies and avoid overlapping counts, two classification criteria were established: (1) Surface eddies have a mean absolute OW-surface value greater than their OW-subsurface counterpart. (2) Subsurface eddies are defined when both the mean OW value and the magnitude of the relative vorticity within the subsurface of the defined density layers, such as σ_{θ} = 25.5-26.5 kg m⁻³, exceeds those in the surface values.

The detected surface and subsurface eddies were then screened on the basis of an equivalent radius, extracting them with radii within a defined range, such as a range between 10 and 200 km. To avoid detecting filament like convoluted contours as eddies, the criterion were set with the ratio of equivalent radius based on the area of closed contour to that based on the circumference. The screened eddies were then tracked in time by comparing the shared area between two consecutive time steps among the eddies. Then, only the eddies older than a defined time, such as 10 days, were retained.

The invention can take form of an entirely hardware embodiment, an entirely software embodiment or an embodiment containing both hardware and software elements. In a preferred embodiment, the invention is implemented in software, which includes but is not limited to firmware, resident software, microcode, etc. Furthermore, the invention can take the form of a computer program product accessible from a computer-usable or computer-readable medium providing program code for use by or in connection with a computer or any instruction execution system. For the purposes of this description, a computer-usable or computer-readable can be any apparatus that can contain, store, communicate, propagate, or transport the program for use by or in connection with the instruction execution system, apparatus, or device.

## Claims

1. A computer implemented method of profiling of particles in a taxa, comprising:
inputting a sequence of input data images,
identifying and categorizing at least one suspended particle in each image of said sequence of input data images to obtain a bounding box around each particle identified on each image of said sequence of input data images and classification data for each of said at least one suspended particle identified;
tracking said sat least one suspended particle in subsequent images of said sequence of input data images based on said bounding box to obtain tracking data; and
outputting a profile of said suspended particles in said taxa based on said classification data and tracking data.

2. The method of claim 1, wherein identifying and categorization includes taxonomic identification.

3. The method of any of claims 1 to 2, wherein a first neural network is trained for identifying at least one regions of interest in each image of said sequence of input data image.

4. The method of claim 3, wherein a second neural network is trained for identifying and categorizing said at least one suspended particle in each image of said subsequent images of said sequence of input data images based on said at least one regions.

5. The method of any of claims 1 to 4, wherein said profile includes biomass calculations and/or status of the ecosystem by extracting live organic matter.

6. The method of any of claims 1 to 5, wherein each image of said sequence of input data images includes metadata from sensors, which is synchronized with said profile to obtain characterization of environmental conditions.

7. The method of claim 6, wherein said metadata includes at least one of depth, chlorophyll-a, salinity and temperature.

8. The method of any of claims 1 to 7, wherein identifying and categorizing includes convolutional operations once on a whole of each image of said sequence of input data images.

9. The method of any of claims 1 to 8, wherein said bounding box related non-particles, such as bubbles and damaged regions, are excluded from tracking.

10. A system for profiling of particles in a taxa, comprising:
a camera to provide a sequence of input data images; and
processor unit configured to execute the computer implemented method of any of claims 1 to 9.

11. A computer program comprising instructions which, when the program is executed by a computer, cause the computer to carry out the method of any of claim 1 to 9.

12. A computer-implemented method for detecting and/or tracking oceanic eddies, the method comprising:
receiving input data comprising oceanic velocity and position measurements, such as at multiple time steps;
initializing a state vector representing an eddy's position and velocity, wherein the initial velocity is set to zero;
updating the state vector;
associating detected eddies with existing tracks based on cost matrices evaluating intersection-over-union, vorticity consistency, and radius similarity; and
outputting detected and tracked eddies, including their positions, velocities, and vorticities.

13. The method of claim 12, wherein the association of detected eddies with existing tracks is performed using three cost matrices, the first representing the intersection-over-union (IoU) between tracked and detected eddies, the second representing vorticity similarity, and the third representing radius similarity, wherein detections with costs exceeding a predefined threshold are excluded from tracking, and/or wherein an eddy is classified as cyclonic or anticyclonic based on the sign of its relative vorticity, computed as the difference between the meridional velocity gradient in the zonal direction and the zonal velocity gradient in the meridional direction.

14. The method of any of claims 12 to 13, further comprising filtering detected eddies based on a minimum lifetime threshold, such that only eddies persisting for more than a predefined duration are retained in the tracking output.

15. The method of any of claims 12 to 14, further comprising filtering out unassigned tracks and initializing new tracks for unmatched detections; and/or applying the Hungarian algorithm to optimize the assignment of eddy detections to tracked eddies; and/or applying a Kalman filter to iteratively update the state-vector, such as wherein the Kalman filter iteratively updates the state vector by:
predicting the eddy's next position using a state transition matrix,
updating the prediction with newly received position measurements,
computing a covariance matrix to quantify uncertainty in the estimation, and
refining the prediction using a measurement noise matrix and a process noise matrix.
